# EUROPÄISCHE PATENTSCHRIFT

(11) **EP 2 095 480 B1**
(45) Veröffentlichungstag und Bekanntmachung des Hinweises auf die Patenterteilung: **23.09.2015**
(21) Anmeldenummer: 07815153.7
(22) Anmeldetag: 17.10.2007
(51) Int. Cl.: H02H 3/00, H02H 5/12

(54) **ELEKTRISCHE INSTALLATIONSANORDNUNG UND VERFAHREN ZUM BETRIEB EINER ELEKTRISCHEN INSTALLATIONSANORDNUNG**
ELECTRIC INSTALLATION ARRANGEMENT AND METHOD FOR THE OPERATION OF AN ELECTRIC INSTALLATION ARRANGEMENT
INSTALLATION ÉLECTRIQUE ET PROCÉDÉ D'EXPLOITATION D'UNE INSTALLATION ÉLECTRIQUE

(30) Priorität: 22.12.2006 AT 21292006
(43) Veröffentlichungstag der Anmeldung: 02.09.2009
(73) Patentinhaber: Eaton GmbH, 3943 Schrems (AT)
(72) Erfinder: KOCH, Michael, 1190 Wien (AT)
(86) Internationale Anmeldenummer: PCT/AT2007/000486
(87) Internationale Veröffentlichungsnummer: WO 2008/077161

(56) Entgegenhaltungen:
- EP-A- 1 075 068
- EP-A- 1 487 077
- US-A1- 2006 114 630

## Beschreibung

Die Erfindung betrifft eine elektrische Installationsanordnung zum Betrieb eines elektrischen Verbrauchernetzes und zur bedarfsorientierten Steuerung eines Sicherheitslevels in dem elektrischen Verbrauchernetz, mit wenigstens einem ersten Schalter zum Trennen wenigstens eines ersten Verbrauchers und/oder eines Teilnetzes vom Verbrauchernetz, wenigstens einem ersten Sensor zum Detektieren wenigstens einer, durch das Verbrauchernetz induzierten bzw. beeinflussbaren ersten physikalischen Größe, und wenigstens einer ersten Auslöseeinheit, welche beim Überschreiten eines vorgebbaren ersten Auslösegrenzwertes durch eine, der ersten Größe proportionale, erste Messgröße den ersten Schalter innerhalb einer ersten Auslösezeit abschaltet und derart den Verbraucher und/oder das Teilnetz vom Verbrauchernetz trennt, wobei die elektrische Installationsanordnung wenigstens eine erste Steuer- und Kontrolleinheit zur vorgebbaren und automatischen Anpassung des ersten Auslösegrenzwerts und/oder der ersten Auslösezeit in Abhängigkeit wenigstens eines Steuerparameters aufweist.

In herkömmlichen elektrischen Installationsanordnungen zum Betrieb eines elektrischen Verbrauchernetzes sind Schutzeinrichtungen vorgesehen, mit welchen einzelne Verbraucher oder ganze Teilnetze vom Verbrauchernetz getrennt werden können, wenn etwa ein sicherheitsrelevanter Parameter, wie z.B. ein Fehlerstrom, einen Grenzwert überschreitet. Diese Grenzwerte sind abhängig vom verwendeten Schalter und werden nicht durch tatsächliche Gegebenheiten beeinflusst. Dies führt dazu, dass Bereiche, welche für den Aufenthalt von Menschen und/oder Haustieren vorgesehen sind, auf einen hohen Sicherheitslevel, daher geringen Auslösegrenzwerten, abgestimmt sind, was zu unnötigen Netzabschaltungen und somit zu nicht verfügbaren bzw. einsatzbereiten Anlagen führen kann, obwohl diese Netzabschaltung aufgrund der Abwesenheit der Bewohner, und daher auch keiner Gefahr für Leib und Leben, unterbleiben hätte können.

Die US 2006/114630 A1 beschreibt eine elektrische Verteileranlage, welche mittels Sensoren die Anwesenheit von Menschen in der Umgebung stromführender Leiter feststellt, und in einem solchen Fall die Grenzwerte zum Abschalten eines Netzes verringert.

Die EP 1 075 068 A beschreibt das Abschalten eines Teilnetzes, wenn kein Strom in dem Teilnetz fließt.

Aufgabe der Erfindung ist es daher eine elektrische Installationsanordnung der eingangs genannten Art anzugeben, mit welcher die genannten Nachteile vermieden werden können, mit welcher unnötige Netzabschaltungen verhindert und eine hohe Netzverfügbarkeit bei gleichzeitig hohem Schutz der Bewohner erreicht werden kann.

Erfindungsgemäß wird dies dadurch erreicht, dass die erste Steuer- und Kontrolleinheit wenigstens eine Uhr, insbesondere eine Zeitschaltuhr, zur vorgebbaren, automatischen und zeitgesteuerten Anpassung des ersten Auslösegrenzwerts und/oder der ersten Auslösezeit, umfasst.

Dadurch können unnötige Netzabschaltungen verhindert und eine hohe Netzverfügbarkeit erreicht werden. Dadurch kann der Sicherheitslevel in einem elektrischen Verbrauchernetz bedarfsorientiert gesteuert werden. Dadurch kann etwa in Anwesenheit schutzwürdiger Lebewesen, wie insbesondere Menschen oder Nutztiere, ein hoher Sicherheitslevel, daher geringe Auslösegrenzwerte und kurze Auslösezeiten, eingehalten werden, während etwa bei Abwesenheit derartiger schutzwürdiger Lebewesen nur ein geringer Schutzpegel, welcher etwa auf die Anforderungen für den Gebäude- bzw. Anlagenschutz, insbesondere Brandschutz, angepasst ist, eingehalten wird, wodurch Ausfälle des elektrischen Verbrauchernetzes aufgrund unnötiger Netzabschaltungen zum Schutz nicht anwesender schutzwürdiger Lebewesen verhindert werden können. Dadurch kann eine besonders einfache Art der Steuerung bzw. Kontrolle der elektrischen Installationsanordnung erreicht werden, da die Auslösegrenzwerte und Auslösezeiten in Abhängigkeit der Zeit automatisch durch die Steuer- und Kontrolleinheit verstellt bzw. angepasst werden. Dies ist vor allem bei Bereichen mit geregelten An- und/oder Abwesenheitszeiten der Belegschaft bzw. der Bewohner vorteilhaft anwendbar, da außer einer einfachen Zeitsteuerung keine weiteren Komponenten notwendig sein können.

In diesem Zusammenhang kann in Weiterführung der Erfindung vorgesehen sein, dass die erste Steuer- und Kontrolleinheit wenigstens eine Schaltlogik, insbesondere einen Mikroprozessor, aufweist. Dadurch können auch komplexe Steuer- und/oder Kontrollaufgaben durch die Steuer- und Kontrolleinheit wahrgenommen werden, wie etwa die Anpassung des ersten Auslösegrenzwertes und/oder der ersten Auslösezeit aufgrund weiterer Steuerparameter als lediglich der Zeit, wobei beispielsweise weitere Parameter, wie etwa die Daten einer Alarmanlage für die Anpassung des ersten Auslösegrenzwertes und/oder der ersten Auslösezeit herangezogen werden können, bzw. zusammen mit der Zeit als Steuerparameter logisch verknüpft werden können.

Gemäß einer weiteren Ausfühzungsform der Erfindung kann vorgesehen sein, dass die erste Steuer- und Kontrolleinheit wenigstens einen Ausgang und/oder wenigstens einen Eingang, insbesondere eine Busschnittstelle und/oder eine Funkschnittstelle, aufweist. Dadurch kann die Steuer- und Kontrolleinheit Daten an ein Anzeigegerät ausgeben, bzw. die Anpassung des ersten Auslösegrenzwertes und/oder der ersten Auslösezeit an der wenigstens einen ersten Auslöseeinheit vornehmen, indem etwa ein erster Auslösegrenzwert an einem Ausgang der Steuer- und Kontrolleinheit an dem die erste Auslöseeinheit angeschlossen ist ausgegeben wird.

Gemäß wieder einer anderen Ausführungsform der Erfindung kann vorgesehen sein, dass diese wenigstens ein erstes Mittel zur Feststellung der Anwesenheit eines ersten Lebewesens vorgebbarer Art, in einer vorgebbaren ersten Umgebung um den ersten Verbraucher und/oder das Teilnetz, aufweist, welches zur Übermittlung von Anwesenheitsdaten an die erste Steuer- und Kontrolleinheit ausgebildet ist. Dadurch kann die Anpassung des ersten Auslösegrenzwertes und/oder der ersten Auslösezeit von der Anwesenheit eines ersten Lebewesens abhängig gemacht werden. Dadurch können derartige Lebewesen, insbesondere Menschen und/oder Nutz- bzw. Haustiere, durch die Installationsanordnung besonders geschützt werden, ohne dass dieser besondere Schutz zu vermehrten Ausfallen der Installationsanordnung bei Abwesenheit derartiger erster Lebewesen führt.

Eine Variante der Erfindung kann darin bestehen, dass das erste Mittel zur Feststellung der Anwesenheit eines ersten Lebewesens vorgebbarer Art als Kamera, Infrarotsensor, Bewegungsmelder, Vibrationsaufnehmer, Lichtschranke und/oder Mikrophon ausgebildet ist. Dadurch ist eine einfache und hochfunktionelle Ausbildung des wenigstens einen ersten Mittels zur Feststellung der Anwesenheit eines ersten Lebewesens gegeben, welche einfach und genau die Beistimmung der Anwesenheit eines ersten Lebewesens ermöglicht.

In weiterer Ausgestaltung der Erfindung kann vorgesehen sein, dass die Anwesenheitsdaten ein Steuerparameter zur vorgebbaren und automatischen Anpassung des ersten Auslösegrenzwerts sind. Dadurch kann die Anpassung des ersten Auslösegrenzwertes und/oder der ersten Auslösezeit aufgrund der Anwesenheit eines ersten Lebewesens in dem Bereich um den Verbraucher bzw. das Teilnetz, und daher rein bedarfsorientiert durchgeführt werden.

In Weiterbildung der Erfindung kann vorgesehen sein, dass der durch die erste Steuer- und Kontrolleinheit an die Auslöseeinheit übermittelte erste Auslösegrenzwert, bei Detektion des ersten Lebewesens in der ersten Umgebung, geringer ist, als bei von ersten Lebewesen freier erster Umgebung. Dadurch ist der volle Schutz eines ersten Lebewesens vor Schädigung durch den elektrischen Strom des elektrischen Verbrauchernetzes durch die Installationsanordnung gegeben.

Gemäß einer Weiterführung der Erfindung kann vorgesehen sein, dass die durch die erste Steuer- und Kontrolleinheit an die Auslöseeinheit übermittelte erste Auslösezeit, bei Detektion des ersten Lebewesens in der ersten Umgebung, geringer ist, als bei von ersten Lebewesen freier erster Umgebung. Dadurch kann ein wirksamer Anlagenschutz erreicht werden, wobei Fehlauslösungen und somit Todzeiten der Anlage aufgrund zu geringer Auslösegrenzwerte verhindert werden können.

Gemäß einer weiteren Ausbildung der Erfindung, bei welcher der erste Sensor als Stromsensor, Spannungssensor, Fehlerstromsensor, Temperatursensor, Schadgassensor und/oder Rauchsensor, ausgebildet ist, kann vorgesehen sein, dass der erste Sensor wenigstens einen Sensorausgang, insbesondere einen Analogausgang und/oder einen Digitalausgang, aufweist, und zur Übermittlung der ersten Messgröße an die erste Steuer- und Kontrolleinheit und/oder die erste Auslöseeinheit ausgebildet ist. Dadurch ist eine Übermittlung der ersten Messgröße an die Steuer- und Kontrolleinheit bzw. die Auswerteeinheit möglich. Dadurch kann der Sensor separat von dem Schaltgerät angeordnet werden, wodurch sich vor allem bei umfangreichen Teilnetzen die Möglichkeit ergibt, eine umfangreiche Gesamtsituation des Teilnetzes zu erfassen.

In diesem Zusammenhang kann in Weiterführung der Erfindung vorgesehen sein, dass die erste Auslöseeinheit wenigstens eine erste Komparatorschaltung zum Vergleich der ersten Messgröße mit dem ersten Auslösegrenzwert aufweist. Dies stellt eine besonders einfache Vorrichtung zum Vergleich der ersten Messgröße mit dem ersten Auslösegrenzwert dar.

Eine andere mögliche Ausführungsform kann darin bestehen, dass die erste Auslöseeinheit wenigstens eine Analyseeinheit zur Analyse der ersten Messgröße im Zeitbereich und/oder im Bildbereich, insbesondere umfassend einen Microprozessor, Mikrocontroller und/oder digitalen Signalprozessor, aufweist, und wobei für einen ersten Zeit- und/oder Bildbereich ein erster Auslösegrenzwert und/oder eine erste Auslösezeit, und für einen zweiten Zeit- und/oder Bildbereich ein zweiter Auslösegrenzwert und/oder eine zweite Auslösezeit vorgesehen sind. Dadurch kann die erste Messgröße nicht nur hinsichtlich einer absoluten Größe, etwa hinsichtlich des Scheitelwertes oder des Effektivwertes, hin bewertet und mit einem Auslösegrenzwerte verglichen werden, sondern vielmehr als zeitlich und frequenzmäßig veränderliches Signal betrachtet und entsprechend hinsichtlich dessen Verhalten im Zeit- und/oder einem Bildbereich, etwa dem Frequenzbereich, betrachtet werden, wobei für unterschiedliche Bereiche unterschiedliche Auslösegrenzwerte vorgesehen sein können. Dadurch kann die Sicherheit in der elektrischen Installationsanordnung weiter gesteigert werden, da für jeweils unterschiedliche Fehlerarten bzw. Fehlerströme unterschiedliche bzw. spezielle Bewertungskriterien angewendet werden können.

In Weiterführung der Erfindung kann vorgesehen sein, dass der erste Sensor, die erste Auslöseeinleit und der erste Schalter einstückig in Form eines Schutzschalters, insbesondere eines Leitungsschutzschalters, Fehlerstromschutzschalters Differenzstromschutzschalters, Kombischalters und/oder Leistungsschutzschalters, ausgebildet sind. Dadurch ist eine besonders einfache und kompakte Ausgestaltung gegenständlicher Erfindung möglich.

In diesem Zusammenhang kann in Weiterführung der Erfindung vorgesehen sein, dass ein durch die erste Steuer- und Kontrolleinheit steuerbares erstes Einschaltgerät mit dem ersten Schalter wirkverbunden ist. Dadurch ist nach einem Abschalten eines Verbrauchers auch dessen automatisches Einschalten möglich.

Die Erfindung betrifft weiters ein Verfahren zum Betrieb einer, insbesondere erfindungsgemäßen, elektrischen Installationsanordnung, mit einem elektrischen Verbrauchernetz, mit wenigstens einem ersten Schalter zum Trennen wenigstens eines ersten Verbrauchers und/oder eines Teilnetzes vom Verbrauchernetz, wenigstens einem ersten Sensor zum Detektieren wenigstens einer, durch das Verbrauchernetz induzierten bzw. beeinflussbaren ersten physikalischen Größe, und wenigstens einer ersten Auslöseeinheit, wobei beim Überschreiten eines vorgebbaren ersten Auslösegrenzwertes durch eine, der ersten Größe proportionale, erste Messgröße der erste Schalter innerhalb einer ersten Auslösezeit von der Auslöseeinheit abgeschaltet wird, und derart der Verbraucher und/oder das Teilnetz vom Verbrauchernetz getrennt wird, wobei der erste Auslösegrenzwert und/oder die erste Auslösezeit in Abhängigkeit wenigstens eines Steuerparameters durch wenigstens eine erste Steuer- und Kontrolleinheit vorgebbar und automatisch angepasst werden.

Aufgabe der Erfindung ist es ein Verfahren der vorstehend genannten Art anzugeben, mit welchem unnötige Netzabschaltungen verhindert und eine hohe Netzverfügbarkeit bei gleichzeitig hohem Schutz der Bewohner erreicht werden kann.

Erfindungsgemäß wird dies dadurch erreicht, dass der erste Auslösegrenzwert und/oder die erste Auslösezeit zeitlich vorgebbar und automatisch angepasst werden.

Dadurch können unnötige Netzabschaltungen verhindert und eine hohe Netzverfügbarkeit erreicht werden. Dadurch kann der Sicherheitslevel in einem elektrischen Verbrauchernetz bedarfsorientiert gesteuert werden. Dadurch kann etwa in Anwesenheit schutzwürdiger Lebewesen, wie insbesondere Menschen oder Nutztiere, ein hoher Sicherheitslevel, daher geringe Auslösegrenzwerte und kurze Auslösezeiten, eingehalten werden, während etwa bei Abwesenheit derartiger schutzwürdiger Lebewesen nur ein geringer Schutzpegel, welcher etwa auf die Anforderungen für den Gebäude- bzw. Anlagenschutz, insbesondere Brandschutz, angepasst ist, eingehalten wird, wodurch Ausfälle des elektrischen Verbrauchernetzes aufgrund unnötiger Netzabschaltungen zum Schutz nicht anwesender schutzwürdiger Lebewesen verhindert werden können. Dadurch kann eine besonders einfache Art der Steuerung bzw. Kontrolle der elektrischen Installationsanordnung erreicht werden, da die Auslösegrenzwerte und Auslösezeiten in Abhängigkeit der Zeit automatisch durch die Steuer- und Kontrolleinheit verstellt werden. Dies ist vor allem bei Bereichen mit geregelten An- und/oder Abwesenheitszeiten der Belegschaft bzw. der Bewohner vorteilhaft anwendbar, da außer einer einfachen Zeitsteuerung keine weiteren Komponenten notwendig sind. Gemäß wieder einer anderen Ausführungsform der Erfindung kann vorgesehen sein, dass die Anwesenheit eines ersten Lebewesens vorgebbarer Art, in einer vorgebbaren ersten Umgebung um den ersten Verbraucher und/oder das Teilnetz detektiert wird. Dadurch können die Auslösegrenzwerte und Auslösezeiten in Abhängigkeit der tatsächlichen Anwesenheit von ersten Lebewesen gesteuert werden.

Eine Variante der Erfindung kann darin bestehen, dass der erste Auslösegrenzwert und/oder die erste Auslösezeit in Abhängigkeit von der Anwesenheit des ersten Lebewesens in der ersten Umgebung angepasst werden. Dadurch der jeweilige Schutz, definiert durch die jeweiligen Auslösegrenzwerte und Auslösezeiten, an die Anwesenheit eines ersten Lebewesens geknüpft werden. Dadurch kann eine Art von Sicherheitsbereich um ein erstes Lebewesen gebildet werden, welcher sich mit diesem "mitbewegt", daher die jeweils geringen Auslösegrenzwerte und Auslösezeiten "bewegen" sich zusammen mit einem, sich durch eine komplexe elektrische Installationsanordnung bewegenden ersten Lebewesen mit, und "umhüllen" dieses in der Art eines unsichtbaren Schutzmantels.

In weiterer Ausgestaltung der Erfindung kann vorgesehen sein, dass bei Detektion des ersten Lebewesens in der ersten Umgebung ein erster Auslösegrenzwert und/oder eine erste Auslösezeit an die Auslöseeinheit übermittelt wird, welcher bzw. welche geringer ist, als bei von ersten Lebewesen freier ersten Umgebung. Dadurch ist der volle Schutz eines ersten Lebewesens vor Schädigung durch den elektrischen Strom des elektrischen Verbrauchernetzes durch die Installationsanordnung gegeben. Dadurch kann ein wirksamer Anlagenschutz erreicht werden, wobei Fehlauslösungen und somit Todzeiten der Anlage aufgrund zu geringer Auslösegrenzwerte verhindert werden können.

Die Erfindung wird unter Bezugnahme auf die beigeschlossenen Zeichnungen, in welchen besonders bevorzugte Ausführungsformen beispielhaft dargestellt sind, näher beschrieben. Dabei zeigt:
Fig. 1 ein Blockschaltbild einer ersten Ausführungsform einer erfindungsgemäßen Installationsanordnung;
Fig. 2 ein Blockschaltbild einer zweiten Ausführungsform einer erfindungsgemäßen Installationsanordnung;
Fig. 3 ein Blockschaltbild einer dritten Ausführungsform einer erfindungsgemäßen Installationsanordnung;
Fig. 4 ein Blockschaltbild einer vierten Ausführungsform einer erfindungsgemäßen Installationsanordnung;
Fig. 5 ein Blockschaltbild einer fünften Ausführungsform einer erfindungsgemäßen Installationsanordnung;
Fig. 6 ein Blockschaltbild einer sechsten Ausführungsform einer erfindungsgemäßen Installationsanordnung; und
Fig. 7 ein Blockschaltbild einer siebenten Ausführungsform einer erfindungsgemäßen Installationsanordnung.

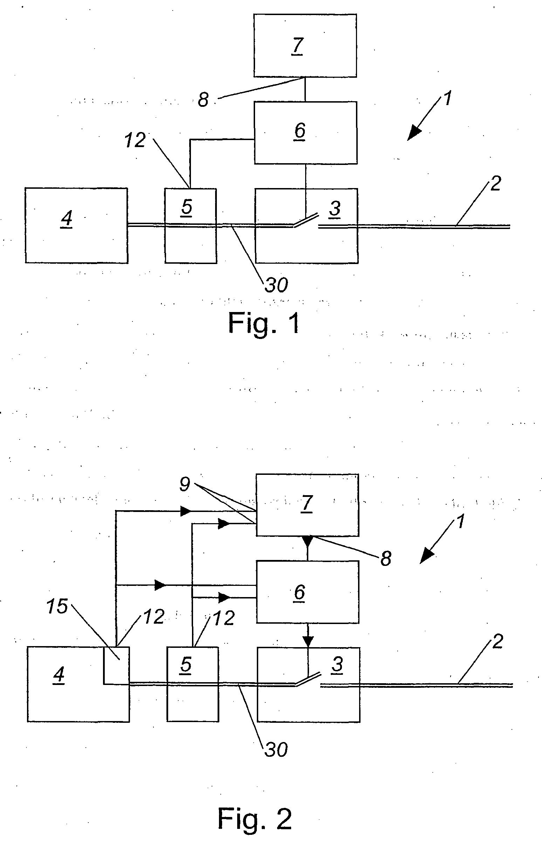

Die Fig. 1 bis 7 zeigen unterschiedliche Ausführungsformen einer elektrischen Installationsanordnung 1 zum Betrieb eines elektrischen Verbrauchernetzes 2, mit wenigstens einem ersten Schalter 3 zum Trennen wenigstens eines ersten Verbrauchers 4 vom Verbrauchernetz 2, wenigstens einem ersten Sensor 5 zum Detektieren wenigstens einer, durch das Verbrauchernetz 2 induzierten bzw. beeinflussbaren ersten physikalischen Größe, und wenigstens einer ersten Auslöseeinheit 6, welche beim Überschreiten eines vorgebbaren ersten Auslösegrenzwertes durch eine, der ersten Größe proportionale, erste Messgröße den ersten Schalter 3 innerhalb einer ersten Auslösezeit abschaltet und derart den Verbraucher 4 vom Verbrauchernetz 2 trennt, wobei die elektrische Installationsanordnung 1 wenigstens eine erste Steuer- und Kontrolleinheit 7 zur vorgebbaren und automatischen Anpassung des ersten Auslösegrenzwerts und/oder der ersten Auslösezeit in Abhängigkeit wenigstens eines Steuerparameters aufweist.

Dadurch können unnötige Abschaltungen von Verbrauchern 4 bzw. Teilnetzen 30 verhindert und eine hohe Netzverfügbarkeit erreicht werden. Dadurch kann der Sicherheitslevel in einem elektrischen Verbrauchernetz 2 bedarfsorientiert gesteuert werden. Dadurch kann etwa in Anwesenheit schutzwürdiger Lebewesen, wie insbesondere Menschen oder Nutztiere, ein hoher Sicherheitslevel, daher geringe Auslösegrenzwerte und kurze Auslösezeiten, eingehalten werden, während etwa bei Abwesenheit derartiger schutzwürdiger Lebewesen nur ein geringer Schutzpegel, welcher etwa auf die Anforderungen für den Gebäude- bzw. Anlagenschutz, insbesondere Brandschutz, angepasst ist, eingehalten wird, wodurch Ausfälle des elektrischen Verbrauchernetzes 2 aufgrund unnötiger Netzabschaltungen zum Schutz nicht anwesender schutzwürdiger Lebewesen verhindert werden können.

Erfindungsgemäße Installationsanordnungen 1 sind zum Betrieb jeder Art eines elektrischen Verbrauchernetzes 2 vorgesehen. Insbesondere sind diese für elektrische Endverbrauchernetze 2 bzw. Hausversorgungsnetze, welche beispielsweise in Europa mit Spannung von 230V/400V betrieben werden, vorgesehen. In weitere Folge wird für Verbrauchernetz 2 die kurze Bezeichnung Netz 2 verwendet werden. Durch erfindungsgemäße Installationsanordnungen 1 können Verbraucher 4 vom Netz 2 getrennt werden, bzw. ganze Teilnetze 30, daher Teilbereiche eines Netzes 2, abgeschaltet werden. Als Teilnetz 30, wird dabei, wie in den Fig. 1 bis 7 dargestellt, der durch den ersten Schalter 3 abschaltbare und somit durch den ersten Schalter 3 geschützte Teilbereich des Netzes 2 bezeichnet. Sofern nicht anders bezeichnet, können sich die nachstehend auf das Trennen des ersten Verbrauchers 4 vom Netz 2 gerichteten Ausführungen auch auf das Trennen eines Teilnetzes 30 vom Netz 2 beziehen. Dies kann insbesondere zum Schutz von ersten Lebewesen als auch Anlagen vor den Wirkungen des elektrischen Stroms vorgesehen sein. Als sog. erste bzw. schutzwürdige Lebewesen, werden dabei insbesondere Menschen, Haus- und Nutztiere bezeichnet.

Erfindungsgemäße Installationsanordnungen 1 weisen wenigstens einen ersten Schalter 3 auf, welcher wenigstens einen ersten Verbraucher 4 bzw. ein Teilnetz 30 mit dem Netz 2 verbindet bzw. vorgesehen ist diese vom Netz 2 zu trennen. Bei einem ersten Schalter 3 kann es sich um jede Art Schalter 3 handeln, welcher in der Lage ist die zu erwartenden Ströme beim Trennen eines Verbrauchers 4 vom Netz 2 - etwa auch im Kurzschlussfall - zu schalten. Insbesondere kann vorgesehen sein - und wie an späterer Stelle noch ausführlich beschrieben - dass der erste Schalter 3 als Schutzschalter 13 ausgebildet ist. Mit dem ersten Schalter 3 ist wenigstens eine erste Auslöseeinheit 6 wirkverbunden bzw. umfasst der erste Schalter 3 eine solche Auslöseeinheit 6, wodurch der erste Schalter 3 automatisch gesteuert abgeschaltet werden kann. Die erste Auslöseeinheit 6 kann dabei etwa als elektromagnetische Vorrichtung ausgebildet sein, welche elektrisch gesteuert den ersten Schalter 3 abschaltet. Weiters umfasst eine erfindungsgemäße Installationsanordnung 1 wenigstens einen ersten Sensor 5 zum Detektieren wenigstens einer, durch das Netz 2 induzierten bzw. beeinflussbaren ersten physikalischen Größe, etwa einer Spannung, einem Strom, insbesondere einem Fehlerstrom, und/oder einer Temperatur. Der erste Sensor 5 ist daher insbesondere als Stromsensor, Summenstromwandler, Differenzstromwandler und/oder Thermoelement ausgebildet. Es kann aber auch ein Schadgassensor vorgesehen sein. Es ist vorgesehen, dass die durch den Sensor 5 ermittelte erste Messgröße an die erste Auslöseeinheit 6 übermittelt wird, wobei dies sowohl leitungsgebunden als auch drahtlos, etwa mittels Licht bzw. Funk, vorgesehen sein kann, und der erste Sensor 5 bevorzugt wenigstens einen Sensorausgang 12, insbesondere einen Analogausgang und/oder einen Digitalausgang, aufweist, und zur Übermittlung der ersten Messgröße an die erste Steuer- und Kontrolleinheit 7 und/oder die erste Auslöseeinheit 6 ausgebildet ist. Die erste Auslöseeinheit 6 umfasst dabei Mittel um Messwerte mit einem vorgebbaren ersten Auslösegrenzwert zu vergleichen, und beim Überschreiten des ersten Auslösegrenzwertes durch die erste Messgröße den ersten Schalter 3 innerhalb einer ersten Auslösezeit abzuschalten und derart den Verbraucher 4 vom Netz 2 zu trennen bzw. das Teilnetz 30 als solches abzuschalten. Hiefür ist besonders bevorzugt vorgesehen, dass die erste Auslöseeinheit 6 wenigstens eine erste Komparatorschaltung zum Vergleich der ersten Messgröße mit dem ersten Auslösegrenzwert aufweist, wobei der erste Auslösegrenzwert etwa durch einen vorgebbaren Spannungspegel gebildet werden kann. Es kann aber auch vorgesehen sein, dass die erste Auslöseeinheit 6 wenigstens eine Analyseeinheit zur Analyse der ersten Messgröße im Zeitbereich und/oder im Bildbereich, insbesondere umfassend einen Mikroprozessor, Mikrocontroller und/oder digitalen Signalprozessor, aufweist, und wobei für einen ersten Zeit- und/oder Bildbereich ein erster Auslösegrenzwert und/oder eine erste Auslösezeit, und für einen zweiten Zeit- und/oder Bildbereich ein zweiter Auslösegrenzwert und/oder eine zweite Auslösezeit vorgesehen sind. Dabei kann etwa der zeitliche Verlauf der ersten Messgröße berücksichtigt werden, daher ob diese ansteigt oder abfällt, oder aber über eine vorgebbare Zeitdauer einen vorgebbaren dritten Auslösegrenzwert aufweist. Es kann auch vorgesehen sein, die erste Messgröße als frequenzabhängiges Signal zu betrachten und vom Zeitbereich in einen Bildbereich zu transformieren, etwa in Form einer FFT, einer Wavelet-Transformation, oder einer Laplace- Transformation, wodurch die erste Messgröße weiter analysiert werden kann, und wie vorstehend angedacht für unterschiedliche Auslösegrenzwerte und Auslösezeiten unterschiedliche Zeit- und/oder Bildbereiche vorgesehen sein können. So ist etwa bekannt, dass die Wirkung des elektrischen Stroms auf den Menschen stark frequenzabhängig ist, daher dass zum Schutz des Menschen vor Schädigungen durch den elektrischen Strom unterschiedliche Frequenzbereiche eines gemessenen Fehlerstroms, in Form des ersten Messwertes, bevorzugt mit unterschiedlichen Grenzwerten verglichen werden.

Es kann vorgesehen sein, und wie in den Fig. 1 bis 4 dargestellt, dass der erste Sensor 5, die erste Auslöseeinheit 6 und/oder der erste Schalter 3 als separate Elemente ausgebildet und in einem Netzwerk angeordnet sind, bzw. zusammenwirken. Dadurch ist es beispielsweise möglich den ersten Schalter 3 von dem ersten Sensor 5 zu trennen, daher die erste Messgröße an einem anderen Bereich aufzunehmen als dem an dem der ersten Schalter 3 angeordnet ist. Dies kann vor allem bei mehreren Sensoren 5 vorteilhaft sein, da sich dadurch ein umfassenderes Bild der tatsächlichen physikalischen Gegebenheiten in dem durch den ersten Schalter 3 abschaltbaren Teilnetz 30 bietet. Es kann jedoch auch vorgesehen sein, dass wenigstens zwei der vorstehend benannten Elemente in einem gemeinsamen Gehäuse angeordnet sind, und beispielsweise auch einzelne Baugruppen gemeinsam verwenden, daher dass beispielsweise nach außen nur eine Schnittstelle vorgesehen ist, und ein einzelner Buscontroller empfangene Daten auf die Elemente aufteilt. Besonders bevorzugt kann vorgesehen sein, dass der erste Sensor 5, die erste Auslöseeinheit 6 und der erste Schalter 3 einstückig in Form eines Schutzschalters 13, insbesondere eines Leitungsschutzschalters, Fehlerstromschutzschalters Differenzstromschutzschalters, Kombischalters und/oder Leistungsschutzschalters, ausgebildet sind, wodurch ein besonders einfacher und kompakter Schaltungsaufbau realisiert werden kann.

Erfindungsgemäß ist vorgesehen, dass die elektrische Installationsanordnung 1 wenigstens eine erste Steuer- und Kontrolleinheit 7 zur vorgebbaren und automatischen Anpassung des ersten Auslösegrenzwerts und/oder der ersten Auslösezeit in Abhängigkeit wenigstens eines Steuerparameters aufweist. Mittels einer derartigen Steuer- und Kontrolleinheit 7 kann der wenigstens eine erste Auslösegrenzwert bzw. die wenigstens eine erste Auslösezeit an die lokalen bzw. temporären Gegebenheiten angepasst werden. Die Steuer- und Kontrolleinheit 7 kann dabei zur Anpassung der Auslösegrenzwerte und Auslösezeiten sämtlicher mit dieser Steuer- und Kontrolleinheit 7 wirkverbundenen Auslöseeinheiten 6 vorgesehen sein. Sofern nicht zur Unterscheidung notwendig wird daher in weiterer Folge - und konsistent zu den Patentansprüchen - lediglich erster Auslösegrenzwert bzw. erste Auslösezeit verwendet werden, wobei dies keine Einschränkung auf lediglich einen Auslösegrenzwert, eine Auslösezeit bzw. eine Auslöseeinheit 6 darstellt.

Bevorzugt ist vorgesehen, dass die erste Steuer- und Kontrolleinheit 7 wenigstens eine Schaltlogik, insbesondere einen Mikroprozessor, aufweist, und zur Kommunikation mit den weiteren Elementen der elektrische Installationsanordnung, wenigstens einen Ausgang 8 und/oder wenigstens einen Eingang 9, insbesondere eine Busschnittstelle 27 und/oder eine Funkschnittstelle 26, aufweist, wobei der Ausgang 8 bzw. der Eingang 9 sowohl als Digital- und/oder Analogausgang bzw. -eingang ausgebildet sein kann, bzw. jede Art einer Busschnittstelle 27 vorgesehen sein kann. Es kann bei einer besonders einfachen Ausführungsform der gegenständlichen Erfindung vorgesehen sein, dass der wenigstens eine Ausgang 8 als Analogausgang ausgebildet ist, an dem direkt der erste Auslösegrenzwert in Form einer elektrischen Spannung ausgegeben wird, und dass der Ausgang 8 direkt mit einem Eingang einer, der ersten Auslöseeinheit 6 zugehörigen Komparatorschaltung verbunden ist. Es kann aber auch vorgesehen sein, dass mittels des Ausgangs 8 und/oder der Bus- und/oder Funkschnittstelle 27, 26 ein digitalcodierter erster Auslösegrenzwert und/oder eine digital codierte erste Auslösezeit an die erste Auslöseeinheit 6 übermittelt wird, was insbesondere den Vorteil der höheren Störsicherheit aufgrund anwendbarer Quell- und/oder Kanalcodierung aufweist, und zusätzlich die gleichzeitige Übermittlung mehrerer Auslösegrenzwerte bzw. Auslösezeiten ermöglicht, was insbesondere bei der Bewertung einer ersten Messgröße im Bildbereich vorteilhaft ist.

Bei besonders einfach ausgeführten elektrischen Installationsanordnungen 1, wie diese etwa in den Fig. 1 bis 3 dargestellt sind, kann bevorzugt vorgesehen sein, dass die erste Steuer- und Kontrolleinheit 7 den ersten Auslösegrenzwert und/oder die erste Auslösezeit in Abhängigkeit der Zeit steuert. Dies ist vor allem bei elektrischen Installationsanlagen 1 vorteilhaft, welche in Bereichen angeordnet sind, welchen strengen temporären Zugangsbeschränkungen unterliegen, wie etwa zeitgesteuerte Tresoranlagen bzw. öffentliche Gebäude wie etwa Schulen, U-Bahn-Bereiche oder Museen. Es ist daher bei derartigen Ausführungsformen vorgesehen, dass die erste Steuer- und Kontrolleinheit 7 wenigstens eine Uhr, insbesondere eine Zeitschaltuhr, zur vorgebbaren, automatischen und zeitgesteuerten Anpassung des ersten Auslösegrenzwerts, umfasst.

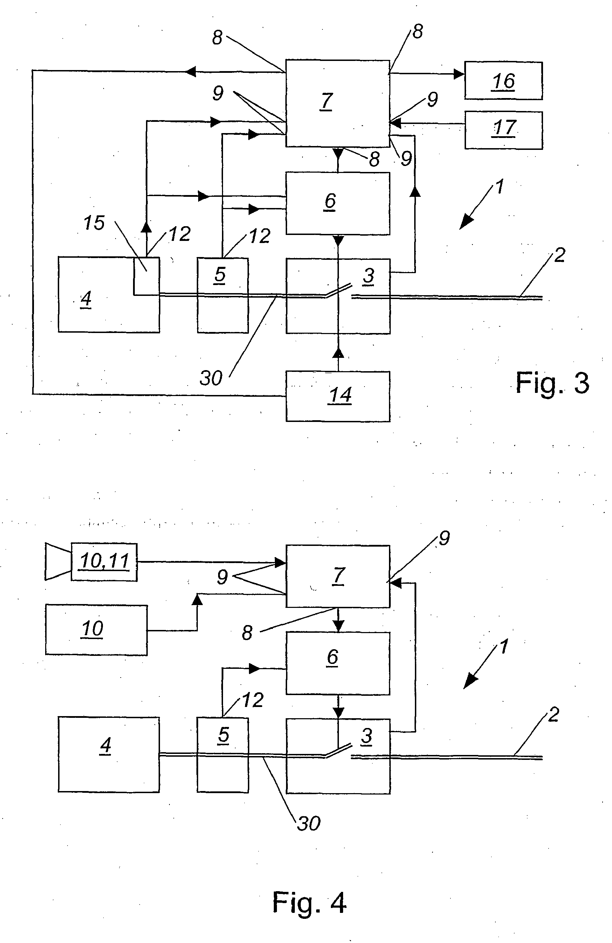

Fig. 1 zeigt eine Basisanordnung einer erfindungsgemäßen elektrischen Installationsanordnung 1, wobei der erste Sensor 5 etwa als Fehlerstromsensor ausgebildet ist. Der erste Verbraucher 4 kann, wie in sämtlichen in den Fig. 1 bis 7 dargestellten Ausführungsformen, nicht nur ein einzelner erster Verbraucher 4 sein, vielmehr kann es sich dabei um eine vorgebbare Anzahl an Verbrauchern 4 handeln. Weiters wird durch die erfindungsgemäße elektrische Installationsanordnung 1 auch das wenigstens eine Teilnetz 30 geschützt, an das, insbesondere mittels bekannter Steckverbindungen, weitere Verbraucher 4 anschließbar sind. Die Ausführungsform gemäß Fig. 2 umfasst zusätzlich einen zweiten Sensor 15, welcher direkt an dem ersten Verbraucher 4 angeordnet ist, und direkt an diesem durch das Verbrauchernetz 2 induzierte bzw. beeinflussbare erste physikalische Größen aufnimmt. Dies kann etwa ein Temperatursensor im Bereich der Anschlussklemmen eines Verbrauchers 4, insbesondere eines Starkstromverbrauchers, wie etwa eines Ofens oder einer Drehbank, sein, da mangelnder Kontaktdruck im Bereich der Anschlussklemmen zu einer übermäßigen Erwärmung dieses Bereichs mit der damit einhergehenden Brandgefahr führt, sodass eine zusätzliche Überwachung dieses Bereichs zu einer weiteren Erhöhung der Sicherheit führt. Fig. 3 zeigt eine Ausführungsform, welche zusätzlich zu den Merkmalen der Ausführungsform gemäß Fig. 2 eine Statusmeldung des ersten Schaltgeräts 3 an die Steuer- und Kontrolleinheit 7 mittels einer entsprechenden Verbindung vorsieht, und wobei ein durch die erste Steuer- und Kontrolleinheit 7 steuerbares erstes Einschaltgerät 14 mit dem ersten Schalter 3 wirkverbunden ist, wodurch das erste Schaltgerät 3 nach dem Abschalten auch wieder eingeschaltet werden kann. Zusätzlich ist mit der Steuer- und Kontrolleinheit 7 eine Anzeige 16 und eine Eingabevorrichtung 17 verbunden, sodass auch direkte Steuerbefehle an die Steuer- und Kontrolleinheit 7 übermittelt werden können, wobei diese Verbindung sowohl leitungsgebunden als auch drahtlos ausgeführt sein kann.

Insbesondere bei Bereichen, welche zeitlich unregelmäßig von Menschen und/oder schutzwürdigen Tieren frequentiert werden, ist es vorteilhaft, wenn die elektrische Installationsanlage 1 den ersten Auslösegrenzwert und/oder die erste Auslösezeit in Abhängigkeit der Anwesenheit erster Lebewesen in einer vorgebbaren ersten Umgebung um den ersten Verbraucher 4 bzw. das Teilnetz 30 steuert. Dadurch ist es möglich den ersten Auslösegrenzwert und/oder die erste Auslösezeit gezielt an anwesende Menschen oder andere schutzwürdige Lebewesen anzupassen, bzw. auch gezielt an die lokalen Gegebenheiten. So kann etwa vorgesehen sein, dass der erste Auslösegrenzwert eines Fehlerstromschutzschalters, wenn der zu schützende Bereich, welche etwa ein Raum oder ein Gebäude aber auch beispielsweise nur einen Verbraucher, wie etwa eine einzelne Maschine oder einen Ofen umfassen kann, verlassen, daher frei von ersten Lebewesen ist, rein auf den Anlagen bzw. Gebäudeschutz abgestimmt werden, was in vielen Fällen mit Brandschutz gleichzusetzen ist. Daher kann in den vorstehend beschriebenen Fällen vorgesehen sein, dass bei einer Netzspannung von 230V ein erster Auslösegrenzwert bei einem Fehlerstrom von I_{N} = 300mA vorgesehen ist. Dieser erste Auslösegrenzwert kann dann durch die Steuer- und Kontrolleinheit 7 bei Anwesenheit erster Lebewesen auf beispielsweise I_{N} = 30mA oder noch weniger eingestellt werden, wenn beispielsweise die anwesenden ersten Lebewesen Kinder sind. Dadurch ist der volle Schutz für erste Lebewesen gegeben, wenn diese zugegen sind, während in deren Abwesenheit nicht durch unnötige Fehlauslösungen Anlagen abgeschaltet werden und dadurch hohe Todzeiten mit den damit einhergehenden Kosten verursacht werden.

Zur Steuerung bzw. Anpassung des ersten Auslösegrenzwertes bzw. der ersten Auslösezeit durch die Steuer- und Kontrolleinheit 7 kann daher bevorzugt vorgesehen sein, dass diese wenigstens ein erstes Mittel 10 zur Feststellung der Anwesenheit eines ersten Lebewesens vorgebbarer Art, in einer vorgebbaren ersten Umgebung um den ersten Verbraucher 4, aufweist, wobei sich diese erste Umgebung, wie vorstehend bereits dargelegt, auch auf ein vollständiges Teilnetz 30, welches beispielsweise einen Raum bzw. ein Gebäude versorgen bzw. durchziehen kann, erstrecken kann, bzw. auch nur die unmittelbar und nächste Umgebung um einen Verbraucher 4 betreffen kann. Das wenigstens eine erste Mittel 10 ist weiters zur Übermittlung von Anwesenheitsdaten an die erste Steuer- und Kontrolleinheit 7 ausgebildet, wobei die Anwesenheitsdaten ein Steuerparameter zur vorgebbaren und automatischen Anpassung des ersten Auslösegrenzwerts sind. Die ersten Mittel 10 weisen daher wenigstens einen Ausgang bzw. eine Busschnittstelle zur Übermittlung der Anwesenheitsdaten an die Steuer- und Kontrolleinheit 7 auf.

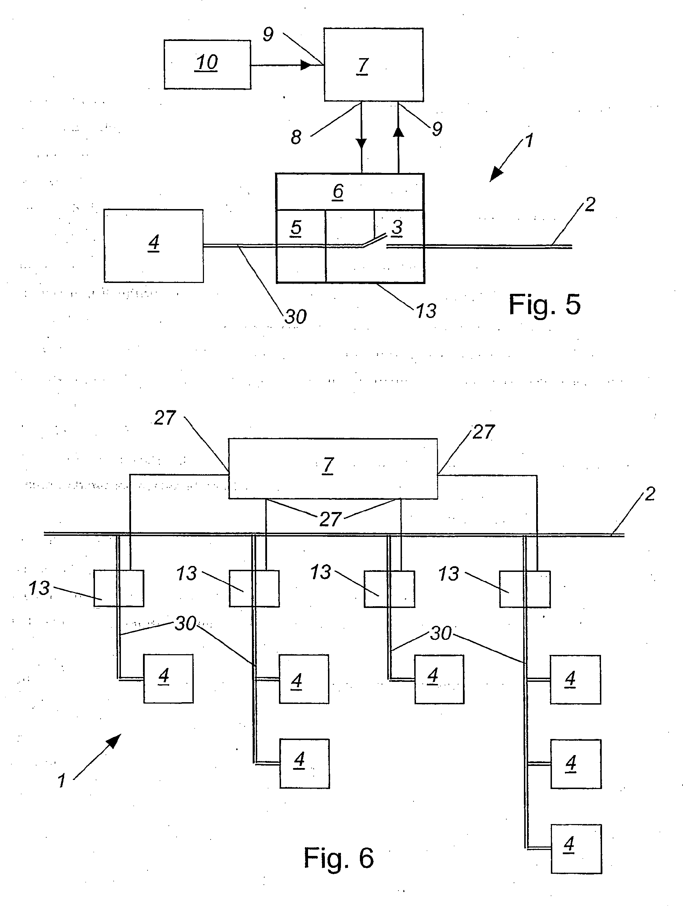

Die ersten Mittel 10 zur Feststellung der Anwesenheit eines ersten Lebewesens vorgebbarer Art können als jede Art Sensor ausgebildet sein, welcher auf die Anwesenheit eines ersten Lebewesens vorgebbarer Art in der ersten Umgebung reagiert bzw. eine reproduzierbare Veränderung anzeigt. Bevorzugt ist vorgesehen, dass das erste Mittel 10 zur Feststellung der Anwesenheit eines ersten Lebewesens vorgebbarer Art als Kamera 11, Infrarotsensor, Bewegungsmelder, Vibrationsaufnehmer, Lichtschranke und/oder Mikrophon ausgebildet ist. Dadurch kann wenigstens die Anwesenheit eines Lebewesens vorgebbarer Art in der ersten Umgebung detektiert werden, und dementsprechend können durch die Steuer- und Kontrolleinheit 7 die Auslösegrenzwerte und Auslösezeiten im Hinblick auf eine höchstmögliche Systemverfügbarkeit bzw. Netzverfügbarkeit bei höchstmöglichem Schutz der ersten Lebewesen angepasst werden. Die ersten Mittel 10 und/oder die Steuer- und Kontrolleinheit 7 kann weiters derart ausgebildet sein, dass diese selbstfahrende und/oder automatisch reagierende Maschinen, etwa Roboter, welche sich in einer ersten Umgebung aufhalten können, als solche erkennt und nicht mit ersten Lebewesen verwechselt. Dies kann etwa durch spezielle Analyse der Anwesenheitsdaten bzw. der von den ersten Mittel 10 gelieferten Daten durchgeführt werden, bzw. durch eine Art Transponder an den Robotern. Die Fig. 4 und 5 zeigen einfache Ausführungsformen derartiger elektrischer Installationsanordnungen 1, wobei die Ausführungsform gemäß Fig. 4 ein erstes Mittel 10 in Form einer Kamera 11 umfasst, und bei der Ausführungsform gemäß Fig. 5, wie vorstehend bereits beschrieben, die erste Auslöseeinheit 6, der erste Schalter 3 und der erste Sensor 5 einstückig als Schutzschalter 13 ausgeführt sind. Fig. 6 zeigt in schematischer Darstellung eine elektrische Installationsanlage 1 mit vier Schutzschaltern 13, an welche jeweils wenigstens ein erster Verbraucher 4 angeschlossen ist. Wie dargestellt wird durch den Schutzschalter 13 dabei jeweils das gesamte nachfolgende Teilnetz 30 geschützt.

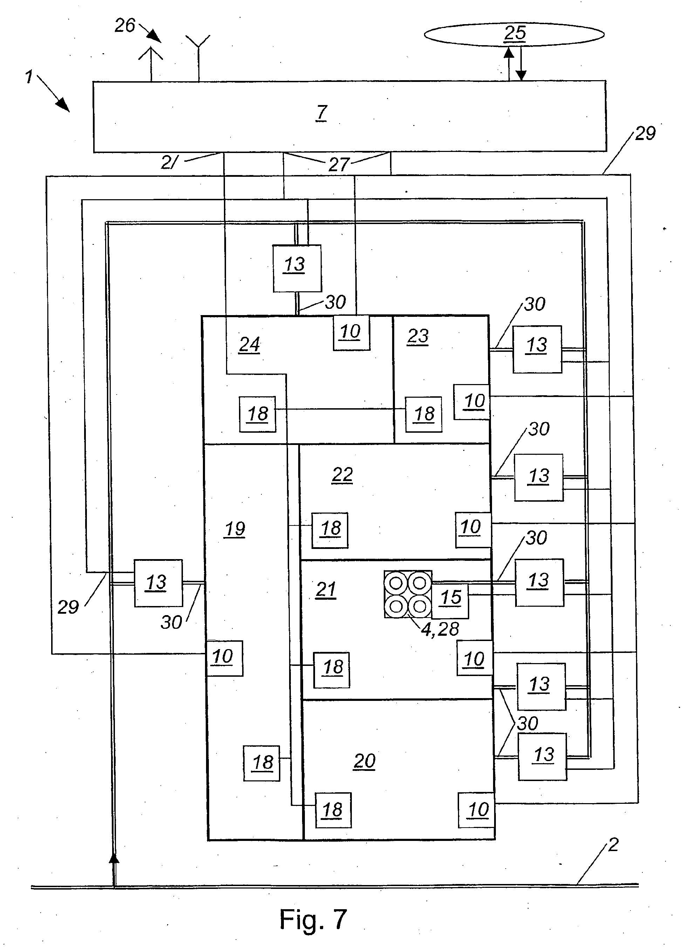

Durch geeignete Wahl der ersten Mittel 10 und Auswertung der von diesen gelieferten Daten kann auch eine Bestimmung einzelner Individuen durch die ersten Mittel 10 bzw. die Steuer- und Kontrolleinheit 7 durchgeführt werden. So kann etwa durch Aufnahme des Trittschalls nicht nur ein erstes Lebewesen detektiert sondern auch bestimmt werden, sofern entsprechende Vergleichsdaten gespeichert sind. Dadurch kann etwa festgestellt werden, ob sich ein Kind einem gefährlichen Verbraucher 4, wie etwa dem Herd 28 nähert, und entsprechend durch Senkung der Auslösegrenzwerte für diesen Verbraucher 4, 28 reagiert werden. Allgemein kann vorgesehen sein, dass der durch die erste Steuer- und Kontrolleinheit 7 an die Auslöseeinheit 6 übermittelte erste Auslösegrenzwert, bei Detektion des ersten Lebewesens in der ersten Umgebung, geringer ist, als bei von ersten Lebewesen freier ersten Umgebung, und/oder, dass die durch die erste Steuer- und Kontrolleinheit 7 an die Auslöseeinheit 6 übermittelte erste Auslösezeit, bei Detektion des ersten Lebewesens in der ersten Umgebung, geringer ist, als bei von ersten Lebewesen freier ersten Umgebung. Daher dass ein sich durch ein Gebäude bzw. eine Wohnung, wie eine solche etwa schematisch in Fig. 7 dargestellt ist, bewegendes erstes Lebewesen von einer Art unsichtbarer Schutzmantel umgeben ist, welcher jeweils an die Anwesenheit des Lebewesens in einem Zimmer bzw. in der Nähe eines Verbrauchers 4 geknüpft ist. Fig. 7 zeigt eine schematische Darstellung einer Wohnung mit einem Vorraum 19, einem Wohnzimmer 20, einer Küche 21, einem Kinderzimmer 22, einem Badezimmer 23 und einem Schlafzimmer 24, wobei jedes Zimmer bzw. jeder Raum 19, 20, 21, 22, 23, 24 durch einen separaten Schutzschalter 13 geschützt ist. In den einzelnen Räumen 19, 20, 21, 22, 23, 24 ist mit Ausnahme der Küche 21 kein Verbraucher 4 dargestellt, solche können jedoch in an sich bekannter Weise an das jeweilige Teilnetz 30 bzw. an nicht dargestellte Steckdosen angeschlossen werden. In der Küche 21 ist der mittels eines eigenen Schutzschalters 13 geschützte Herd 28 dargestellt. Jeder Raum 19, 20, 21, 22, 23, 24 weist weiters erste Mittel 10 zur Feststellung der Anwesenheit eines Lebewesens vorgebbarer Art in dem Raum 19, 20, 21, 22, 23, 24 auf. Zusätzlich ist in jedem Raum 19, 20, 21, 22, 23, 24 ein Brandmelder 18, etwa ein Rauchsensor, angeordnet. All diese Komponenten sind mittels Bussystemen 29 mit der Steuer- und Kontrolleinheit 7 verbunden, welche zusätzlich eine Funkschnittstelle 26 sowie eine Verbindung zum Internet 25 aufweist, wodurch eine Fernsteuerung der Installationsanordnung 1 bzw. eine Statusfernabfrage derselben möglich ist. Es kann auch vorgesehen sein eine Alarmanlage in die elektrische Installationsanordnung 1 einzubinden, bzw. dass die ersten Mittel 10 zur Feststellung der Anwesenheit eines Lebewesens vorgebbarer Art in den Räumen 19, 20, 21, 22, 23, 24 die Anwesenheitsdaten auch an eine Alarmanlage übermitteln.

Beim Betrieb einer erfindungsgemäßen elektrischen Installationsanordnung 1 mit einem elektrischen Verbrauchernetze 2, mit wenigstens einem ersten Schalter 3 zum Trennen wenigstens eines ersten Verbrauchers 4 und/oder eines Teilnetzes 30 vom Verbrauchernetz 2, wenigstens einem ersten Sensor 5 zum Detektieren wenigstens einer, durch das Verbrauchernetz 2 induzierten bzw. beeinflussbaren ersten physikalischen Größe, und wenigstens einer ersten Auslöseeinheit 6, wobei beim Überschreiten eines vorgebbaren ersten Auslösegrenzwertes durch eine, der ersten Größe proportionale, erste Messgröße der ersten Schalter 3 innerhalb einer ersten Auslösezeit von der Auslöseeinheit abgeschaltet wird, und derart der Verbraucher 4 und/oder das Teilnetz 30 vom Verbrauchernetz 2 getrennt wird, ist vorgesehen, dass der erste Auslösegrenzwert und/oder die erste Auslösezeit in Abhängigkeit wenigstens eines Steuerparameters durch wenigstens eine erste Steuer- und Kontrolleinheit 7 vorgebbar und automatisch angepasst werden.

Neben der Möglichkeit der zeitlich vorgebbaren und automatischen Anpassung des ersten Auslösegrenzwerts und/oder der ersten Auslösezeit, ist dabei insbesondere vorgesehen, dass durch die elektrische Installationsanordnung 1 die Anwesenheit eines ersten Lebewesens vorgebbarer Art, in einer vorgebbaren ersten Umgebung um den ersten Verbraucher 4 bzw. das Teilnetz 30 detektiert wird, daher etwa in einem der Räume 19, 20, 21, 22, 23, 24 gemäß Fig. 7, und dass der erste Auslösegrenzwert und/oder die erste Auslösezeit in Abhängigkeit von der Anwesenheit des ersten Lebewesens in der ersten Umgebung angepasst werden, wobei insbesondere vorgesehen ist, dass bei Detektion des ersten Lebewesens in der ersten Umgebung ein erster Auslösegrenzwert und/oder eine erste Auslösezeit an die Auslöseeinheit 6 übermittelt wird, welcher geringer ist, als bei von ersten Lebewesen freier ersten Umgebung, daher dass etwa bei Anwesenheit eines ersten Lebewesens im Badezimmer 23 die Auslösegrenzwerte geringer sind, als wenn kein erstes Lebewesen im Badezimmer 23 ist. Dabei kann, sofern die elektrische Installationsanordnung 1 die entsprechenden ersten Mittel 10 aufweist, um nicht nur die reine Anwesenheit des ersten Lebewesens in einer Umgebung zu detektieren, sondern zusätzlich auch noch das Lebewesen aus einer vorgegebenen Menge an bekannten Lebewesen zu bestimmen, vorgesehen sein, dass etwa bei Anwesenheit von Kindern geringere Auslösegrenzwerte bzw. Auslösezeiten durch die Steuer- und Kontrolleinheit 7 vorgegeben werden, als bei Erwachsenen, welche eine höhere Widerstandfestigkeit gegen die Wirkungen des elektrischen Stroms aufweisen sollten. Eine derartige Bewertung könnte auch aufgrund der Masse eines ersten Lebewesens erfolgen, daher, dass leichtgewichtigen Lebewesen geringere Auslösegrenzwerte bzw. Auslösezeiten zugeordnet werden, als schwergewichtigen Lebewesen.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Elektrische Installationsanordnung (1) zum Betrieb eines elektrischen Verbrauchernetzes (2) und zur bedarfsorientierten Steuerung eines Sicherheitslevels in dem elektrischen Verbrauchernetz, mit wenigstens einem ersten Schalter (3) zum Trennen wenigstens eines ersten Verbrauchers (4) und/oder eines Teilnetzes (30) vom Verbrauchernetz (2), wenigstens einem ersten Sensor (5) zum Detektieren wenigstens einer, durch das Verbrauchernetz (2) induzierten bzw. beeinflussbaren ersten physikalischen Größe, und wenigstens einer ersten Auslöseeinheit (6), welche beim Überschreiten eines vorgebbaren ersten Auslösegrenzwertes durch eine, der ersten Größe proportionale, erste Messgröße den ersten Schalter (3) innerhalb einer ersten Auslösezeit abschaltet und derart den Verbraucher (4) und/oder das Teilnetz (30) vom Verbrauchernetz (2) trennt, wobei die elektrische Installationsanordnung (1) wenigstens eine erste Steuer- und Kontrolleinheit (7) zur vorgebbaren und automatischen Anpassung des ersten Auslösegrenzwerts und/oder der ersten Auslösezeit in Abhängigkeit wenigstens eines Steuerparameters aufweist, **dadurch gekennzeichnet, dass** die erste Steuer- und Kontrolleinheit (7) wenigstens eine Uhr, insbesondere eine Zeitschaltuhr, zur vorgebbaren, automatischen und zeitgesteuerten Anpassung des ersten Auslösegrenzwerts und/oder der ersten Auslösezeit, umfasst.

2. Elektrische Installationsanordnung (1) nach Anspruch 1, **dadurch gekennzeichnet, dass** die erste Steuer- und Kontrolleinheit (7) wenigstens eine Schaltlogik, insbesondere einen Mikroprozessor, aufweist.

3. Elektrische Injstallationsanordnung (1) nach einem der Ansprüche 1 oder 2, **dadurch gekennzeichnet, dass** die erste Steuer- und Kontrolleinheit (7) wenigstens einen Ausgang (8) und/oder wenigstens einen Eingang (9), insbesondere eine Busschnittstelle (27) und/oder eine Funkschnittstelle (26), aufweist.

4. Elektrische Installationsanordnung (1) nach einem der Ansprüche 1 bis 3, **dadurch gekennzeichnet, dass** diese wenigstens ein erstes Mittel (10) zur Feststellung der Anwesenheit eines ersten Lebewesens vorgebbarer Art, in einer vorgebbaren ersten Umgebung um den ersten Verbraucher (4) und/oder das Teilnetz (30), aufweist, welches zur Übennittlung von Anwesenheitsdaten an die erste Steuer- und Kontrolleinheit (7) ausgebildet ist.

5. Elektrische Installationsanordnung (1) nach Anspruch 4, **dadurch gekennzeichnet, dass** das erste Mittel (10) zur Feststellung der Anwesenheit eines ersten Lebewesens vorgebbarer Art als Kamera (11), Infrarotsensor, Bewegungsmelder, Vibrationsaufnehmer, Lichtschranke und/oder Mikrophon ausgebildet ist.

6. Elektrische Installationsanordnung (1) nach Anspruch 4 oder 5, **dadurch gekennzeichnet, dass** die Anwesenheitsdaten ein Steuerparameter zur vorgebbaren und automatischen Anpassung des ersten Auslösegrenzwerts sind.

7. Elektrische Installationsanordnung (1) nach einem der Ansprüche 4 bis 6, **dadurch gekennzeichnet, dass** der durch die erste Steuer- und Kontrolleinheit (7) an die Auslöseeinheit (6) übermittelte erste Auslösegrenzwert, bei Detektion des ersten Lebewesens in der ersten Umgebung, geringer ist, als bei von ersten Lebewesen freier ersten Umgebung.

8. Elektrische Installationsanordnung (1) nach einem der Ansprüche 4 bis 7, **dadurch gekennzeichnet, dass** die durch die erste Steuer- und Kontrolleinheit (7) an die Auslöseeinheit (6) übermittelte erste Auslösezeit, bei Detektion des ersten Lebewesens in der ersten Umgebung, geringer ist, als bei von ersten Lebewesen freier ersten Umgebung.

9. Elektrische Installationsanordnung (1) nach einem der Ansprüche 1 bis 8, wobei der erste Sensor (5) als Stromsensor, Spannungssensor, Fehlerstromsensor, Temperatursensor, Schadgassensor und/oder Rauchsensor, ausgebildet ist, **dadurch gekennzeichnet, dass** der erste Sensor (5) wenigstens einen Sensorausgang (12), insbesondere einen Analogausgang und/oder einen Digitalausgang, aufweist, und zur Übermittlung der ersten Messgröße an die erste Steuer- und Kontrolleinheit (7) und/oder die erste Auslöseeinheit (6) ausgebildet ist.

10. Elektrische Installationsanordnung (1) nach einem der Ansprüche 1 bis 9, **dadurch gekennzeichnet, dass** die erste Auslöseeinheit (6) wenigstens eine erste Komparatorschaltung zum Vergleich der ersten Messgröße mit dem ersten Auslösegrenzwert aufweist.

11. Elektrische Installationsanordnung (1) nach einem der Ansprüche 1 bis 10, **dadurch gekennzeichnet, dass** die erste Auslöseeinheit (6) wenigstens eine Analyseeinheit zur Analyse der ersten Messgröße im Zeitbereich und/oder im Bildbereich, insbesondere umfassend einen Mikroprozessor, Mikrocontroller und/oder digitalen Signalprozessor, aufweist, und wobei für einen ersten Zeit- und/oder Bildbereich ein erster Auslösegrenzwert und/oder eine erste Auslösezeit, und für einen zweiten Zeit- und/oder Bildbereich ein zweiter Auslösegrenzwert und/oder eine zweite Auslösezeit vorgesehen sind.

12. Elektrische Installationsanordnung (1) nach einem der Ansprüche 1 bis 11, **dadurch gekennzeichnet, dass** der erste Sensor (5), die erste Auslöseeinheit (6) und der erste Schalter (3) einstückig in Form eines ersten Schutzschalters (13), insbesondere eines Leitungsschutzschalters, Fehlerstromschutzschalters Differenzstromschutzschalters, Kombischalters und/oder Leistungsschutzschalters, ausgebildet sind.

13. Elektrische Installationsanordnung (1) nach einem der Ansprüche 1 bis 12, **dadurch gekennzeichnet, dass** ein durch die erste Steuer- und Kontrolleinheit (7) steuerbares erstes Einschaltgerät (14) mit dem ersten Schalter (3) wirkverbunden ist.

14. Verfahren zum Betrieb einer elektrischen Installationsanordnung (1), insbesondere nach einem der Ansprüche 1 bis 13, mit einem elektrischen Verbrauchernetz (2), mit wenigstens einem ersten Schalter (3) zum Trennen wenigstens eines ersten Verbrauchers (4) und/oder eines Teilnetzes (30) vom Verbrauchernetz (2), wenigstens einem ersten Sensor (5) zum Detektieren wenigstens einer, durch das Verbrauchernetz (2) induzierten bzw. beeinflussbaren ersten physikalischen Größe, und wenigstens einer ersten Auslöseeinheit (6), wobei beim Überschreiten eines vorgebbaren ersten Auslösegrenzwertes durch eine, der ersten Größe proportionale, erste Messgröße der erste Schalter (3) innerhalb einer ersten Auslösezeit von der Auslöseeinheit abgeschaltet wird, und derart der Verbraucher (4) und/oder das Teilnetz (30) vom Verbrauchernetz (2) getrennt wird, wobei der erste Auslösegrenzwert und/oder die erste Auslösezeit in Abhängigkeit wenigstens eines Steuerparameters durch wenigstens eine erste Steuer- und Kontrolleinheit (7) vorgebbar und automatisch angepasst werden, **dadurch gekennzeichnet, dass** der erste Auslösegrenzwert und/oder die erste Auslösezeit zeitlich vorgebbar und automatisch angepasst werden.

15. Verfahren nach Anspruch 14, **dadurch gekennzeichet,** dass die Anwesenheit eines ersten Lebewesens vorgebbarer Art, in einer vorgebbaren ersten Umgebung um den ersten Verbraucher (4) und/oder das Teilnetz (30) detektiert wird.

16. Verfahren nach Anspruch 15, **dadurch gekennzeichnet, dass** der erste Auslösegrenzwert und/oder die erste Auslösezeit in Abhängigkeit von der Anwesenheit des ersten Lebewesens in der ersten Umgebung angepasst werden.

17. Verfahren nach Anspruch 15 oder 16, **dadurch gekennzeichnet, dass** bei Detektion des ersten Lebewesens in der ersten Umgebung ein erster Auslösegrenzwert und/oder eine erste Auslösezeit an die Auslöseeinheit übermittelt wird, welcher bzw. welche geringer ist, als bei von ersten Lebewesen freier ersten Umgebung.

## Claims

1. Electric installation arrangement (1) for the operation of an electric consumer network (2) and for demand-oriented control of a safety level in the electric consumer network, comprising at least a first switch (3) for disconnecting at least a first consumer (4) and/or a partial network (30) from the consumer network (2), at least a first sensor (5) for detecting at least a first physical variable which is induced or can be influenced by the consumer network (2), and at least a first tripping unit (6) which switches off the first switch (3) within a first tripping time when a first tripping threshold value that can be pre-selected is exceeded by a first measured variable proportional to the first variable, and thereby disconnects the consumer (4) and/or the partial network (30) from the consumer network (2), wherein the electric installation arrangement (1) comprises at least a first control and monitoring unit (7) for the pre-selectable and automatic adjustment of the first tripping threshold value and/or the first tripping time as a function of at least one control parameter, **characterised in that** the first control and monitoring unit (7) comprises at least one clock, especially a timer, for adjusting the first tripping threshold and/or first tripping time in a pre-selectable, automatic and time-controlled manner.

2. Electric installation arrangement (1) according to claim 1, **characterised in that** the first control and monitoring unit (7) comprises at least one switching logic unit, particularly a microprocessor.

3. Electric installation arrangement (1) according to one of claims 1 or 2, **characterised in that** the first control and monitoring unit (7) comprises at least one output (8) and/or at least one input (9), especially a bus interface (27) and/or a radio interface (26).

4. Electric installation arrangement (1) according to one of claims 1 to 3, **characterised in that** it comprises at least a first means (10) for detecting the presence of a first living creature of a pre-selectable kind, in a pre-selectable first environment around the first consumer (4) and/or the partial network (30), said means (10) being configured to transmit presence data to the first control and monitoring unit (7).

5. Electric installation arrangement (1) according to claim 4, **characterised in that** the first means (10) for determining the presence of a first living creature of a pre-selectable kind is configured as a camera (11), infrared sensor, motion detector, vibration sensor, light barrier and/or microphone.

6. Electric installation arrangement (1) according to claim 4 or 5, **characterised in that** the presence data are a control parameter for adjusting the first tripping threshold value in a pre-selectable and automatic way.

7. Electric installation arrangement (1) according to one of claims 4 to 6, **characterised in that** the first tripping threshold value sent by the first control and monitoring unit (7) to the tripping unit (6) is lower upon detection of the first living creature in the first environment than in a first environment which is free from first living creatures.

8. Electric installation arrangement (1) according to one of claims 4 to 7, **characterised in that** the first tripping time sent by the first control and monitoring unit (7) to the tripping unit (6) is lower upon detection of the first living creature in the first environment than in a first environment which is free from first living creatures.

9. Electric installation arrangement (1) according to one of claims 1 to 8, wherein the first sensor (5) is configured as a current sensor, voltage sensor, residual current sensor, temperature sensor, pollution gas sensor and/or smoke detector, **characterised in that** the first sensor (5) comprises at least one sensor output (12), particularly an analogue output and/or a digital output, and is configured to transmit the first measured variable to the first control and monitoring unit (7) and/or the first tripping unit (6).

10. Electric installation arrangement (1) according to one of claims 1 to 9, **characterised in that** the first tripping unit (6) comprises at least a first comparator circuit for comparing the first measured variable with the first tripping threshold value.

11. Electric installation arrangement (1) according to one of claims 1 to 10, **characterised in that** the first tripping unit (6) comprises at least one analytical unit for analysing the first measured variable in the time range and/or in the image range, particularly comprising a microprocessor, microcontroller and/or a digital signal processor, and wherein a first tripping threshold value and/or a first tripping time are provided for a first time and/or image range, and a second tripping threshold value and/or a second tripping time are provided for a second time and/or image range.

12. Electric installation arrangement (1) according to one of claims 1 to 11, **characterised in that** the first sensor (5), the first tripping unit (6) and the first switch (3) are configured integrally in the form of a first circuit breaker (13), particularly a miniature circuit breaker, a residual-current circuit breaker, a differential-current circuit breaker, combination circuit breaker and/or power circuit breaker.

13. Electric installation arrangement (1) according to one of claims 1 to 12, **characterised in that** a first switch-on device (14) which can be controlled by the first control and monitoring unit (7) is operatively connected to the first switch (3).

14. Method for operating an electric installation arrangement (1), particularly according to one of claims 1 to 13, comprising an electric consumer network (2), at least a first switch (3) for disconnecting at least a first consumer (4) and/or a partial network (30) from the consumer network (2), at least a first sensor (5) for detecting at least a first physical variable which is induced or can be influenced by the consumer network (2), and at least a first tripping unit (6), wherein the first switch (3) is switched off within a first tripping time by the tripping unit when a pre-selectable first tripping threshold value is exceeded by a first measured variable which is proportional to the first variable, and the consumer (4) and/or the partial network (30) is thus disconnected from the consumer network (2), wherein the first tripping threshold value and/or the first tripping time are adjusted in a pre-selectable and automatic way by at least a first control and monitoring unit (7) as a function of at least one control parameter, **characterised in that** the first tripping threshold value and/or the first tripping time are adjusted automatically and with pre-selectable timing.

15. Method according to claim 14, **characterised in that** the presence of a first living creature of a pre-selectable kind is detected in a pre-selectable first environment around the first consumer (4) and/or the partial network (30).

16. Method according to claim 15, **characterised in that** the first tripping threshold value and/or the first tripping time are adjusted depending on the presence of the first living creature in the first environment.

17. Method according to claim 15 or 16, **characterised in that**, upon detection of the first living creature in the first environment, a first tripping threshold value and/or a first tripping time, which is or are lower than in the case of an environment free from a first living creature, is or are transmitted to the tripping unit.

## Revendications

1. Installation électrique (1) pour l'exploitation d'un réseau d'abonnés électrique (2) et pour commander en fonction des besoins un niveau de sécurité dans le réseau d'abonnés électrique, comprenant au moins un premier commutateur (3) pour séparer au moins un premier abonné (4) et/ou un sous-réseau (30) du réseau d'abonnés (2), au moins un premier capteur (5) pour détecter au moins une première grandeur physique induite ou influençable par le réseau d'abonnés (2) et au moins une première unité de déclenchement (6) qui, lors du dépassement d'une première valeur limite de déclenchement prédéfinie par une première grandeur de mesure proportionnelle à la première grandeur, déconnecte le premier commutateur (3) dans un premier temps de déclenchement et sépare donc l'abonné (4) et/ou le sous-réseau (30) du réseau d'abonnés (2), dans laquelle l'installation électrique (1) présente au moins une première unité de commande et de contrôle (7) pour adapter de manière prédéfinie et automatique la première valeur limite de déclenchement et/ou le premier temps de déclenchement en fonction d'au moins un paramètre de commande, **caractérisée en ce que** la première unité de commande et de contrôle (7) comprend au moins une horloge, en particulier une minuterie, pour adapter de manière prédéfinie, automatique et synchronisée la première valeur limite de déclenchement et/ou le premier temps de déclenchement.

2. Installation électrique (1) selon la revendication 1, **caractérisée en ce que** la première unité de commande et de contrôle (7) présente au moins un circuit logique de commutation, en particulier un microprocesseur.

3. Installation électrique (1) selon l'une quelconque des revendications 1 ou 2, **caractérisée en ce que** la première unité de commande et de contrôle (7) présente au moins une sortie (8) et/ou au moins une entrée (9), en particulier une interface de bus (27) et/ou une interface radio (26).

4. Installation électrique (1) selon l'une quelconque des revendications 1 à 3, **caractérisée en ce que** celle-ci présente au moins un premier moyen (10) pour établir la présence d'un premier organisme de type prédéfini dans un premier environnement prédéfini autour du premier abonné (4) et/ou du sous-réseau (30), qui est conçu (10) pour transmettre des données de présence à la première unité de commande et de contrôle (7).

5. Installation électrique (1) selon la revendication 4, **caractérisée en ce que** le premier moyen (10) pour établir la présence d'un premier organisme de type prédéfini est conçu sous la forme d'une caméra (11), d'un capteur d'infrarouges, d'un détecteur de mouvement, d'un capteur de vibrations, d'une barrière lumineuse et/ou d'un microphone.

6. Installation électrique (1) selon la revendication 4 ou la revendication 5, **caractérisée en ce que** les données de présence sont un paramètre de commande pour l'adaptation prédéfinie et automatique de la première valeur limite de déclenchement.

7. Installation électrique (1) selon l'une quelconque des revendications 4 à 6, **caractérisée en ce que** la première valeur limite de déclenchement transmise par la première unité de commande et de contrôle (7) à l'unité de déclenchement (6) est plus faible lors de la détection du premier organisme dans le premier environnement que dans le premier environnement exempt de premiers organismes.

8. Installation électrique (1) selon l'une quelconque des revendications 4 à 7, **caractérisée en ce que** le premier temps de déclenchement transmis par la première unité de commande et de contrôle (7) à l'unité de déclenchement (6) est plus petit lors de la détection du premier organisme dans le premier environnement que dans le premier environnement exempts de premiers organismes.

9. Installation électrique (1) selon l'une quelconque des revendications 1 à 8, dans laquelle le premier capteur (5) se présente sous la forme d'un capteur de courant, d'un capteur de tension, d'un capteur de courant défectueux, d'un capteur de température, d'un capteur de gaz polluant et/ou d'un capteur de fumée, **caractérisée en ce que** le premier capteur (5) présente au moins une sortie de capteur (12), en particulier une sortie analogique et/ou une sortie numérique, et est conçu pour transmettre la première grandeur de mesure à la première unité de commande et de contrôle (7) et/ou à la première unité de déclenchement (6).

10. Installation électrique (1) selon l'une quelconque des revendications 1 à 9, **caractérisée en ce que** la première unité de déclenchement (6) présente un premier circuit comparateur pour comparer la première grandeur de mesure à la première valeur limite de déclenchement.

11. Installation électrique (1) selon l'une quelconque des revendications 1 à 10, **caractérisée en ce que** la première unité de déclenchement (6) présente au moins une unité d'analyse pour analyser la première grandeur de mesure dans la plage de temps et/ou dans la plage d'image, en particulier comprenant un microprocesseur, un microcontrôleur et/ou un processeur de signaux numériques, et dans laquelle il est prévu, pour une première plage de temps et/ou d'image, une première valeur limite de déclenchement et/ou un premier temps de déclenchement et, pour une seconde plage de temps et/ou d'image, une seconde valeur limite de déclenchement et/ou un second temps de déclenchement.

12. Installation électrique (1) selon l'une quelconque des revendications 1 à 11, **caractérisée en ce que** le premier capteur (5), la première unité de déclenchement (6) et le premier commutateur (3) sont conçus d'un seul tenant sous la forme d'un premier commutateur de protection (13), en particulier un commutateur de protection de ligne, un commutateur de protection contre les courants de court-circuit, un commutateur de protection contre les courants différentiels résiduels, un commutateur mixte et/ou un commutateur de protection de puissance.

13. Installation électrique (1) selon l'une quelconque des revendications 1 à 12, **caractérisée en ce qu'**un premier appareil de connexion (14) qui peut être commandé par la première unité de commande et de contrôle (7) est activement connecté au premier commutateur (3).

14. Procédé d'exploitation d'une installation électrique (1), en particulier selon l'une quelconque des revendications 1 à 13, comprenant un réseau d'abonnés électriques (2), au moins un premier commutateur (3) pour séparer au moins un premier abonné (4) et/ou un sous-réseau (30) du réseau d'abonnés (2), au moins un premier capteur (5) pour détecter au moins une première grandeur physique induite ou influençable par le réseau d'abonnés (2) et au moins une première unité de déclenchement (6), dans lequel, lors du dépassement d'une première valeur limite de déclenchement prédéfinie par une première grandeur de mesure proportionnelle à la première grandeur, le premier commutateur (3) est déconnecté dans un premier temps de déclenchement par l'unité de déclenchement et donc l'abonné (4) et/ou le sous-réseau (30) est ou sont séparés du réseau d'abonnés (2), dans lequel la première valeur limite de déclenchement et/ou le premier temps de déclenchement sont adaptés de manière prédéfinie et automatique en fonction d'au moins un paramètre de commande par au moins une première unité de commande et de contrôle (7), **caractérisée en ce que** la première valeur limite de déclenchement et/ou le premier temps de déclenchement sont adaptés momentanément de manière prédéfinie et automatique.

15. Procédé selon la revendication 14, **caractérisé en ce que** la présence d'un premier organisme de type prédéfini est détectée dans un premier environnement prédéfini autour du premier abonné (4) et/ou du sous-réseau (30).

16. Procédé selon la revendication 15, **caractérisé en ce que** la première valeur limite de déclenchement et/ou le premier temps de déclenchement sont adaptés en fonction de la présence du premier organisme dans le premier environnement.

17. Procédé selon la revendication 15 ou la revendication 16, **caractérisé en ce que**, lors de la détection d'un premier organisme dans le premier environnement, une première valeur limite de déclenchement et/ou un premier temps de déclenchement est ou sont transmis à l'unité de déclenchement ,lequel ou lesquels est ou sont plus petits que dans le premier environnement exempt de premiers organismes.
